Europäisches Patentamt

European Patent Office

Office européen des brevets

(11) Veröffentlichungsnummer: **0 239 668 B1**

(12) **EUROPÄISCHE PATENTSCHRIFT**

(45) Veröffentlichungstag der Patentschrift: **22.01.92**

(21) Anmeldenummer: **86116170.1**

(22) Anmeldetag: **21.11.86**

(51) Int. Cl.⁵: **G06F 3/037**, H02B 15/02

(54) **Kraftwerkswarte.**

(30) Priorität: **02.12.85 DE 3542585**

(43) Veröffentlichungstag der Anmeldung:
**07.10.87 Patentblatt 87/41**

(45) Bekanntmachung des Hinweises auf die
Patenterteilung:
**22.01.92 Patentblatt 92/04**

(84) Benannte Vertragsstaaten:
**CH DE LI NL**

(56) Entgegenhaltungen:
**EP-A- 0 030 160**
**EP-A- 0 043 201**
**DE-B- 1 763 664**
**FR-A- 2 156 119**

**NEW ELECTRONICS, Band 15, Nr. 12, Juni 1982, Seiten 42-43, London, GB; A. HARMAN: "The peripheral entry panel"**

**AUTOMATISME, Band 22, Nr. 12, Dezember 1977, Seiten 342-347; C. PELLEGRINI et al.: "Un nouveau système d'entrée graphique et son utilisation en mode interactif"**

**ELECTRONICS INTERNATIONAL, Band 57, Nr. 8, 19. April 1984, Seiten 140-144, New York,**

**US; E. PANTTAJA: "Touch screens let your fingers provide a fast, simple entry into the computer"**

**IBM TECHNICAL DISCLOSURE BULLETIN, Band 25, Nr. 12, Mai 1983, Seiten 6664-6665, New York, US; T.N. CRISCIMAGNA et al.: "Triangulation scan for interactive digit"**

(73) Patentinhaber: **SIEMENS AKTIENGESELL-SCHAFT**
**Wittelsbacherplatz 2**
**W-8000 München 2(DE)**

(72) Erfinder: **Bock, Heinz-Wilhelm, Dr.**
**In der Reuth 178**
**W-8520 Erlangen(DE)**
Erfinder: **Hofman, Horst, Dipl.-Ing.**
**Lerchenweg 1**
**W-8526 Bubenreuth(DE)**
Erfinder: **Lochner, Karl-Heinz, Dipl.-Ing.**
**Dechsendorfer Strasse 24**
**W-8551 Röttenbach(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Kraftwerkswarte mit Beobachtungs- und Bedieneinrichtungen, wobei jeweils eine Beobachtungseinrichtung und eine Bedieneinrichtung in einem System kombinierbar sind.

Bisher übliche Kraftwerksanlagen weisen zur Informationsabgabe Anzeigegeräte, wie beispielsweise Zeigerinstrumente, auf. Die Bedienung des Kraftwerkes erfolgt mittels Schaltern und Tastaturen. In der Regel ist jedem Meßwert ein eigenes Anzeigegerät und jeder zu steuernden Einrichtung eine eigene Beobachtungs- und Bedieneinrichtung zugeordnet.

Derartige Warten sind meistens nicht ausgelastet. Sie haben zudem einen sehr hohen Platzbedarf, was die Anlage unübersichtlich macht. Außerdem wird durch den hohen Platzbedarf ein großer Raum und damit ein unwirtschaftlich großes Gebäude für die Kraftwerkswarte notwendig. Eine mit Zeigerinstrumenten ausgestattete Warte ist darüber hinaus für neue Aufgaben nur mit großem technischem Aufwand umrüstbar.

Neben den genannten Einrichtungen einer Kraftwerkswarte ist der Einsatz von Bildschirmen zur Beobachtung des Kraftwerksprozesses mittels alphanumerischer und grafischer Darstellungen bekannt. Zur Bedienung eines Prozesses werden auch in eng begrenztem Umfang Bildschirme in Verbindung mit Lichtgriffeln eingesetzt.

Ein Verfahren zum Steuern und Überwachen von Anlagen, wobei eine Elektronenstrahlröhre und ein Lichtgriffel eingesetzt werden, ist aus der DE-AS-1 763 664 zu entnehmen. Dabei wird auf dem Bildschirm der Röhre ein Symbol, das für einen Schalter steht, markiert. Nach der Markierung wird dieser Schalter über eine mechanische Tastatur betätigt.

Die bisher verwendeten Bildwiedergabegeräte sind mit nicht spiegelungsfreien Bildröhren versehen. Das erschwert die Arbeit des Bedienungspersonals. Außerdem können mit Hochspannung betriebene Bildröhren elektrische Schläge verursachen, die für das Personal wie auch für empfindliche Elektronik gefährlich sind. Wegen der hohen statischen Aufladung der Bildschirme von Bildröhren bildet sich eine Schmutzschicht, die die Qualität des Bildes beeinträchtigt. Bildröhren sind auch sehr empfindlich gegen mechanische Zerstörung. Nach einer Implosion kann ein Brand entstehen, der große Schäden verursacht.

Aus New Electronics, Band 15, Nr. 12, Juni 1982, Seiten 42 und 43, ist eine Kombination aus einem Display und einer Sensorplatte bekannt. Mittels der Sensorplatte werden dabei auf dem Display gezeigte Größen abgerufen. Auf diese Weise gewonnene Werte müssen erst verarbeitet werden, bevor dann ein Bauteil, beispielsweise ein Schalter, aufgrund der Verarbeitung der Daten betätigt werden kann. Dazu wäre eine mechanische Tastatur erforderlich.

Mechanische Schalter und Tastaturen benötigen sehr viel Raum. Insbesondere in einer Kraftwerkswarte, die eine große Anzahl Bedieneinrichtungen aufweist, wirkt sich der Platzbedarf auf die erforderliche Größe des Gebäudes für die Kraftwerkswarte aus.

Der Erfindung liegt die Aufgabe zugrunde, eine Kraftwerkswarte zu konstruieren, die auf kleinem Raum, einer Forderung aus der Ergonomie entsprechend, eine weitgehende räumliche Kompatibilität von Beobachtungs- und Bedieneinrichtungen bei hoher Flexibilität der Aufgabenzuordnung zu den verschiedenen Arbeitsplätzen gewährleistet. Eine bestimmte Aufgabe soll von einem System aus Beobachtungs- und Bedieneinrichtung auf einfache Weise zu einem anderen System zu verlegen sein. Jeder Mitarbeiter soll einen festen Arbeitsplatz haben. Die zu konstruierende Kraftwerkswarte soll außerdem überschaubar und sicher zu betreiben sein.

Die Aufgabe wird gemäß der Erfindung dadurch gelöst, daß die Beobachtungseinrichtung ein Plasmabildschirm zur Darstellung eines mit Symbolen versehenen Schaltplanes ist, wobei die Symbole für Bauteile einer Schaltung stehen, daß die Bedieneinrichtung eine Sensorplatte ist, die den Plasmabildschirm überspannend angeordnet ist und die im Bereich der Symbole auf dem Schaltplan sensitiv ist zum Bedienen eines dem Symbol entsprechenden Bauteiles und daß dem System eine Bedientastatur zum Abruf eines Schaltplanes aus einem Speicher und ein Prozessor zugeordnet sind.

Damit wird der Vorteil erzielt, daß direkt am System ohne Verwendung einer mechanischen Tastatur, die viel Raum erforderte, Bauteile nicht nur markiert, sondern geschaltet werden können. Durch die Anbindung an den zentralen Prozessor und den Speicher ist jede Aufgabe jedem beliebigen Arbeitsplatz zuzuordnen. Vorteilhaft benötigt die Kraftwerkswarte, insbesondere jeder Arbeitsplatz, nur wenig Raum. Trotzdem ist die Warte übersichtlich und durch die Kombination von Plasmabildschirm und Sensorplatte schnell und sicher zu bedienen. Die verwendeten Plasmabildschirme sind spiegelungsfrei, benötigen wenig Raum und genügen hohen Sicherheitsanforderungen.

Die Sensorplatte ist beispielsweise infrarotempfindlich. Sie wird durch Berühren auf einfache Weise bedient.

Auf dem Bildschirm sind Symbole, die bedienbare Elemente darstellen, mit Markierungen versehen. Diese Markierungen leuchten auf, falls die Sensorplatte im Bereich des Symboles berührt wird. Mit dem Bildschirm ist eine Freigabetaste verbunden, durch die das dem markierten Symbol zugeordnete ausgewählte Element schaltbar ist.

Hiermit wird der Vorteil erzielt, daß vor dem Schalten die Auswirkungen des Schaltvorganges auf dem Bildschirm überprüfbar sind. Mit der erfindungsgemäßen Kraftwerkswarte werden Fehlschaltungen vermieden. Außerdem ist ausgeschlossen, daß zwei sich störende Funktionen gleichzeitig ausgelöst werden. Nach dem Markieren eines Symboles muß nämlich zuerst die Freigabetaste betätigt werden, bevor ein weiteres Symbol anwählbar ist.

Auf dem Bildschirm ist außerdem ein besonders markiertes Feld angeordnet, durch dessen Berührung eine versehentliche Symbolmarkierung zu löschen ist. Damit werden Bedienungsfehler rechtzeitig behoben.

Jeder Bildschirm ist mit dem Prozessor und mit dem Speicher verbunden, in dem mehrere Bilder abspeicherbar sind. Mit einer zugeordneten Funktionstastatur werden verschiedene Bilder nacheinander auf dem Bildschirm dargestellt. Außerdem sind mehrere System über den Prozessor miteinander verknüpft, so daß Aufgaben von einem Bildschirm auf einen anderen übertragbar sind. Eine Sperre verhindert eine konkurrierende Bedienung der gleichen Anlage von zwei Arbeitsplätzen aus.

Damit wird der Vorteil erzielt, daß von jedem Arbeitsplatz aus jede Information abrufbar und jeder Bedienvorgang von jedem beliebigen Arbeitsplatz aus durchzuführen ist. Dadurch kommt man mit weniger Personal aus. Bei einer selbst kurzfristigen Übernahme zusätzlicher Aufgaben muß der Arbeitsplatz nicht verlassen werden. Durch die Bindung des Personals an feste Arbeitsplätze kommt es zu weniger Fehlbedienungen. Die Betriebssicherheit der Warte wird erhöht.

Bisher waren in einer Kraftwerkswarte die Aufgaben an feste Arbeitsplätze gebunden. In der erfindungsgemäßen Kraftwerkswarte hat jede Person des Bedienungspersonals einen eigenen Arbeitsplatz. Die anfallenden Aufgaben werden den besetzten Arbeitsplätzen zugeleitet. Dadurch ist eine effektive Bewältigung der Kraftwerkssteuerung gewährleistet.

Mit der Erfindung wird der Vorteil erzielt, daß ein Kraftwerk von einer übersichtlichen Warte aus sowohl ergonomisch als auch schnell und zuverlässig bedienbar ist. Die momentan wichtigen Informationen und Schaltbilder werden einem beliebigen freien Arbeitsplatz zugeleitet.

Die Erfindung wird anhand der Zeichnung näher erläutert:

Fig. 1 zeigt den Grundriß einer Kraftwerkswarte.
Fig. 2 zeigt ein System aus Plasmabildschirm und Sensorplatte.

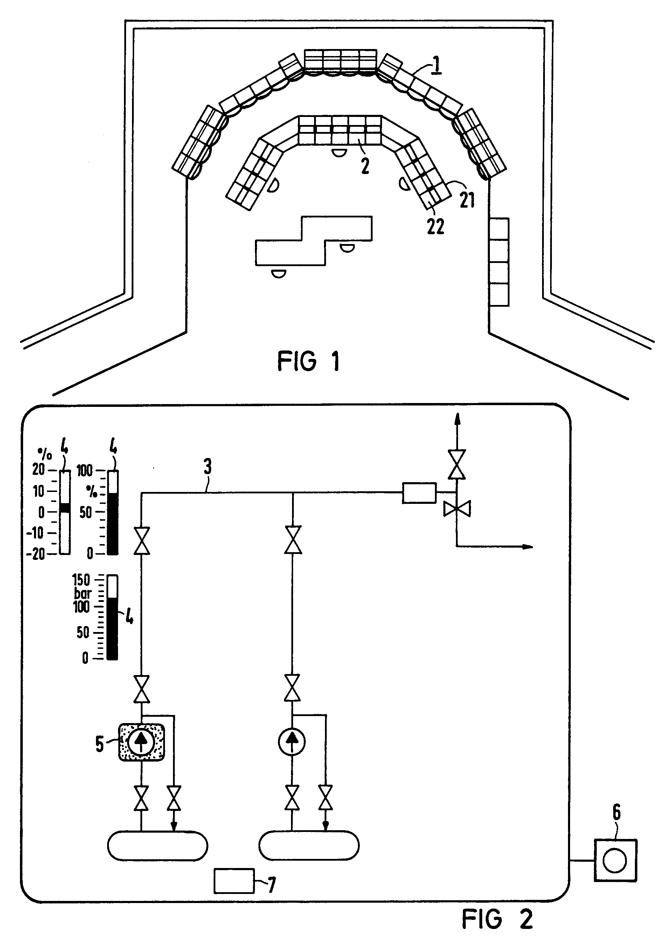

In einer Kraftwerkswarte nach Fig. 1 ist vor einer Informationswand 1 ein Prozeßleitstand 2 angeordnet. Dieser besteht aus mehreren gleichartigen Systemen aus Beobachtungs- und Bedieneinrichtungen 21. Jedes dieser Systeme 21 weist einen durch eine Sensorplatte überspannten Plasmabildschirm auf und ist mit einer Tastatur 22 verbunden. Ein solches System 21 aus Plasmabildschirm und Sensorplatte ist in Fig. 2 dargestellt. Der Bildschirm nach Fig. 2 zeigt ein Rohrleitungssystem 3, das Pumpen und Ventile enthält. Darüber hinaus sind auf dem Bildschirm Skalen 4 für verschiedenartige Meßgrößen dargestellt. Symbole, die bedienbare Elemente, beispielsweise eine Pumpe darstellen, sind auf dem Bildschirm mit Markierungen versehen. Durch Berühren der Sensorplatte im Bereich eines solchen Symboles leuchtet dessen Markierung 5 auf. Mit der Sensorplatte ist eine separate Freigabetaste 6 verbunden, durch die die zuvor angewählte Pumpe geschaltet wird. Ein weiteres durch ein Symbol auf dem Bildschirm repräsentiertes Element ist erst dann schaltbar, nachdem das zuvor angewählte Element geschaltet ist. Dadurch werden Fehlschaltungen vermieden.

Auf der Sensorplatte ist ein Löschfeld 7 angeordnet. Durch Berühren dieses Löschfeldes 7 wird eine falsche Markierung 5 gelöscht. Nach dem Markieren des Symboles kann, bevor die Freigabetaste 6 betätigt wird, anhand des auf dem Bildschirm dargestellten Schemas überprüft werden, wie sich die geplante Maßnahme auswirkt. Anschließend wird entweder die Freigabetaste 6 oder das Löschfeld 7 betätigt.

Jeder Bildschirm ist mit einem Prozessor und einem Speicher verbunden. Im Speicher sind mehrere Bilder abgespeichert, die durch eine Funktionstaste abrufbar sind und in beliebiger Reihenfolge auf dem Bildschirm dargestellt werden. Der Plasmabildschirm und die Sensorplatte sind über den Prozessor gekoppelt. Dadurch sind beide unabhängig von dem gezeigten Bild stets aufeinander abgestimmt.

Mehrere Systeme aus Plasmabildschirm und Sensorplatte sind über den Prozessor miteinander verknüpft. Dadurch sind Aufgaben bei Bedarf von einem Bildschirm auf einen anderen abrufbar. Eine Sperre verhindert eine gleichzeitige Bedienung des gleichen Schaltelementes in Konkurrenz von zwei Bedienungseinrichtungen aus.

In der erfindungsgemäßen Kraftwerkswarte kann jeder beliebige Schaltvorgang von jeder beliebigen Bedieneinrichtung aus durchgeführt werden. Dadurch kommt man mit Beobachtungs- und Bedieneinrichtungen 21 nach Fig. 1 aus, die in einer ungefähr 100 m$^2$ großen Kraftwerkswarte unterzubringen sind.

**Patentansprüche**

**1.** Kraftwerkswarte mit Beobachtungs- und Bedieneinrichtungen, wobei jeweils eine Beobachtungseinrichtung und eine Bedieneinrichtung in einem System (21) kombinierbar sind, **dadurch gekennzeichnet,** daß die Beobachtungseinrichtung ein Plasmabildschirm zur Darstellung eines mit Symbolen versehenen Schaltplanes ist, wobei die Symbole für Bauteile einer Schaltung stehen, daß die Bedieneinrichtung eine Sensorplatte ist, die den Plasmabildschirm überspannend angeordnet ist und die im Bereich der Symbole auf dem Schaltplan sensitiv ist zum Bedienen eines dem Symbol entsprechenden Bauteiles und daß dem System (21) eine Bedientastatur zum Abruf eines Schaltplanes aus einem Speicher und ein Prozessor zugeordnet sind.

2. Kraftwerkswarte nach Anspruch 1,
**dadurch gekennzeichnet,**
daß die Sensorplatte infrarotempfindlich ist.

3. Kraftwerkswarte nach Anspruch 1,
**dadurch gekennzeichnet,**
daß auf dem Bildschirm Symbole, die bedienbare Elemente darstellen, mit Markierungen (5) versehen sind, wovon jeweils eine durch Berühren der Sensorplatte im Bereich des Symboles aufleuchtet und
daß mit dem Bildschirm eine Freigabetaste (6) verbunden ist, durch die das ausgewählte, markierte Element schaltbar ist.

4. Kraftwerkswarte nach Anspruch 3,
**dadurch gekennzeichnet,**
daß auf der Sensorplatte ein besonders markiertes Löschfeld (7) angeordnet ist, durch dessen Berührung die Markierung (5) eines Symboles zu löschen ist.

5. Kraftwerkswarte nach Anspruch 1,
**dadurch gekennzeichnet,**
daß der Prozessor und der Speicher, in dem mehrere Bilder abspeicherbar sind, mit dem Bildschirm verbunden sind und daß mit dem Prozessor eine Funktionstaste Auswählen der zu zeigenden Bilder verbunden ist.

6. Kraftwerkswarte nach Anspruch 1,
**dadurch gekennzeichnet,**
daß mehrere Systeme (21) über den Prozessor miteinander verknüpft sind, so daß Aufgaben von einem Bildschirm auf einen anderen abrufbar sind und
daß eine Sperre vorhanden ist, die eine Bedienung in Konkurrenz ausschließt.

**Claims**

1. Power station control apparatus having observation and operating devices, wherein an observation device and an operating device can each be combined in one system (21), characterised in that the observation device is a plasma screen for representing a circuit diagram provided with symbols, wherein the symbols represent components of a circuit, in that the operating device is a sensor plate which is arranged to cover the plasma screen and which, in the region of the symbols on the circuit diagram, is sensitive in order to operate a component corresponding to the symbol, and in that an operating keyboard for retrieving a circuit diagram from a memory, and a processor, are assigned to the system (21).

2. Power station control apparatus according to claim 1, characterised in that the sensor plate is sensitive to infra red.

3. Power station control apparatus according to claim 1, characterised in that the symbols on the screen, which represent operable elements, are provided with markings (5) one of which is respectively illuminated by contact of the sensor plate in the region of the symbol and in that connected to the screen is a release key (6) by which the selected marked element can be switched on.

4. Power station control apparatus according to claim 3, characterised in that on the sensor plate there is arranged a particularly marked extinguishing field (7) through contact with which the marking (5) of a symbol is to be extinguished.

5. Power station control apparaus according to claim 1, characterised in that the processor and the memory, in which several images can be stored, are connected to the screen and in that a function key is connected to the processor for selecting the images to be displayed.

6. Power station control apparatus according to claim 1, characterised in that several systems (21) are linked by means of the processor so that tasks can be retrieved from one screen to the other, and in that there is a block which excludes a rival operation.

**Revendications**

1. Poste de contrôle de centrale électrique comportant des dispositifs d'observation et de commande et dans lequel respectivement un dispositif d'observation et un dispositif de commande peuvent être combinés pour former un système (21), caractérisé par le fait que le dispositif d'observation est un écran à plasma de formation d'images servant à représenter un tableau de connexions portant des symboles, qui concerne des composants d'un circuit, que le dispositif de commande est une plaque à capteurs, qui est disposée de manière à recouvrir l'écran à plasma de formation d'images et qui est sensible dans la zone des symboles situés sur le schéma de connexion, pour la commande d'un composant correspondant au symbole, et qu'au système (21) sont associés un clavier de commande servant à appeler un schéma de connexions à partir d'une mémoire, et un processeur.

2. Poste de contrôle de centrale électrique suivant la revendication 1, caractérisé par le fait que la plaque à capteurs est sensible au rayonnement infrarouge.

3. Poste de contrôle de centrale électrique suivant la revendicationn 1, caractérisé par le fait que sur l'écran, des symboles, qui représentent des éléments commandables, sont pourvus de marques (5), dont l'une est allumée lorsqu'on touche la plaque à capteurs dans la zone du symbole, et
qu'à l'écran est raccordée une touche de libération ou d'autorisation (6), au moyen de laquelle l'élément marqué, sélectionné, peut être activé.

4. Poste de contrôle de centrale électrique suivant la revendication 3, caractérisé par le fait que sur la plaque à capteurs est disposée une zone d'effacement (7) qui est marquée de façon particulière et qui, lorsqu'on la touche, sert à effacer la marque (5) d'un symbole.

5. Poste de contrôle de centrale électrique suivant la revendication 1, caractérisé par le fait que le processeur et la mémoire dans laquelle plusieurs images peuvent être mémorisées, sont raccordés à l'écran et qu'une touche de fonction "sélection des images représentées" est raccordée au processeur.

6. Poste de contrôle de centrale électrique suivant la revendication 1, caractérisé par le fait que plusieurs systèmes (21) sont combinés entre eux par l'intermédiaire du processeur de sorte que des tâches peuvent être appelées d'un écran à un autre, et
qu'il est prévu un dispositif de blocage qui exclut une commande concurrentielle.

FIG 1

FIG 2